# EUROPEAN PATENT APPLICATION

(11) **EP 2 851 172 A1**
(43) Date of publication of application: **25.03.2015**
(21) Application number: 14174678.4
(22) Date of filing: 01.02.2005
(51) Int. Cl.: B28D 1/22, C03B 33/10

(54) **Cutter wheel and method for manufacturing the cutter wheel**

(30) Priority: 02.02.2004 JP 2004059772
(62) Divisional of application: 05709574.7
(71) Applicant: Mitsuboshi Diamond Industrial Co., Ltd., Suita-city, Osaka 564-0044 (JP)
(72) Inventor: Maekawa, Kazuya, Settsu, Osaka 566-0034 (JP); Sakaguchi, Ryota, Settsu, Osaka 566-0034 (JP); Miura, Yoshitaka, Settsu, Osaka 566-034 (JP)
(74) Representative: TBK

(57) **Abstract**

The invention concerns a method for manufacturing a cutter wheel (10C) for scribing a brittle material substrate, having the steps of forming a blade edge on a wheel (10A) in a disc form by roughly grinding the blade edge at at least one blade edge angle θ1 and then forming the edge side of said blade (10B) by finely grinding the blade edge at a blade edge angle θ2 which is different from blade edge angle θ1. The invention further concerns a cutter wheel (10C).

## Description

### Technical Field

The present invention relates to a cutter wheel for scribing a brittle material substrate where a ridge line in V shape is formed as a cutter along the circumference of a wheel in a disc form, and a number of protrusions in a predetermined form are formed at approximately equal intervals in the above described ridge line, to methods for scribing and breaking a brittle material substrate using the same, and to a method for manufacturing a cutter wheel.

### Background Technology

A liquid crystal panel display, which is a type of flat panel display (hereinafter referred to as FPD), is formed by bonding two glass substrates together and injecting liquid crystal into the gap between the two glass substrates. In addition, in the case where a reflective type substrate is used from among substrates for projectors, referred to as LCOS, a pair of brittle substrates where a quartz substrate and a semiconductor wafer are bonded together is used. Such a substrate where brittle substrates are bonded together is usually scribed and broken into unit substrates having predetermined dimensions by forming scribe lines in the surface of the bonded substrate, which is a mother substrate, and then, breaking the substrate along the formed scribe lines.

Here, in this specification, formation of scribe lines is referred to as "cutting" and breaking and separating of the substrate along the formed scribe lines is referred to as "breaking." In addition, in this invention, the properties of a cutter wheel which allow for creation of a crack which is deep and vertical relative to the plate thickness of a glass substrate in the direction perpendicular to the surface of the glass substrate are referred to as "penetrability." In the case where the below described cutter wheel having high penetrability is used, it is possible to convert the substrate into a "broken" state only in the "cutting" process.

Patent Document 1 and Patent Document 2 disclose a method where scribe lines are formed in a bonded mother substrate using a cutter wheel, and then, the above described glass substrate is broken into unit glass substrates of desired dimensions along the formed scribe lines.
Patent Document 1: Japanese Unexamined Patent Publication H11 (1999)-116260
Patent Document 2: Japanese Patent No. 3,074,143

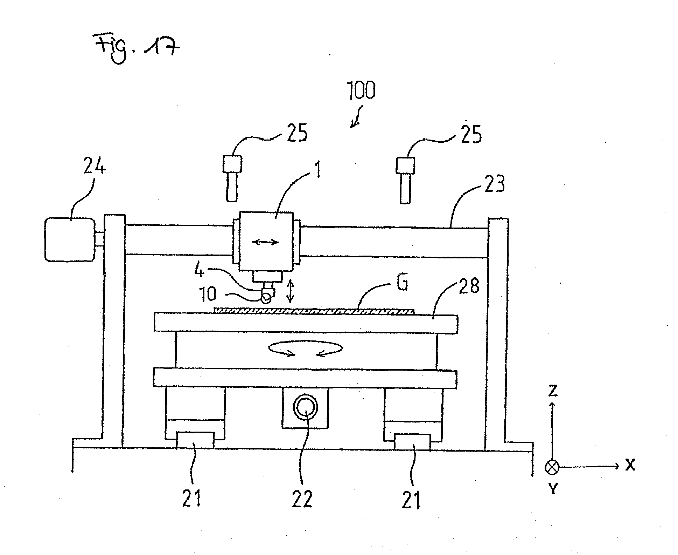

Fig 17 is a front diagram showing a known scribing apparatus which is used for scribing as described above.

A conventional scribing method is described with reference to Fig 17. Here, in the following description, the left-right direction in the diagram is referred to as direction X, and the direction perpendicular to the paper is referred to as direction Y.

As shown in Fig 17, a scribing apparatus 100 is provided with a table 28 on which a glass substrate G is mounted and secured by means of a vacuum suction means and which is rotatable horizontally, a pair of guide rails 21 and 21 which are parallel to each other and support table 28 in such a manner that table 28 is moveable in direction Y, a ball screw 22 for moving table 28 along guide rails 21 and 21, a guide bar 23 which is provided above table 28 in direction X, a scribing head 1 which is provided on guide bar 23 so as to be slidable in direction X and applies pressure for cutting to the below described cutter wheel 10, a motor 24 for driving scribe head 1 so that scribe head 1 slides along guide bar 23, a chip holder 4 which is provided at the lower end of scribe head 1 so as to be able to go up and down and rotate left and right, a cutter wheel 10 which is mounted at the lower end of chip holder 4 so as to be rotatable, and a pair of CCD cameras 25 which are installed above guide bar 23 and recognize alignment marks that are formed on the glass substrate G on table 28.

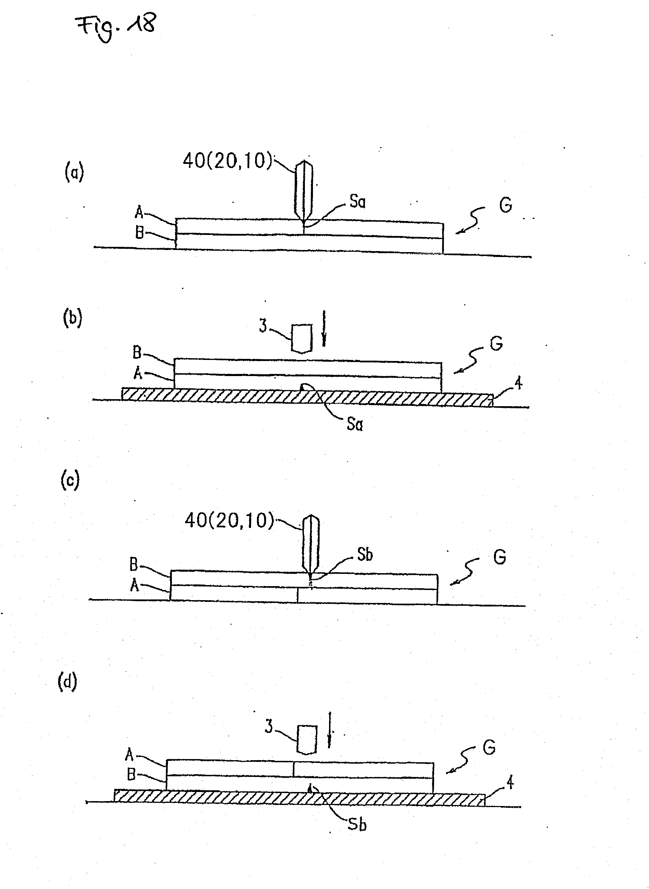

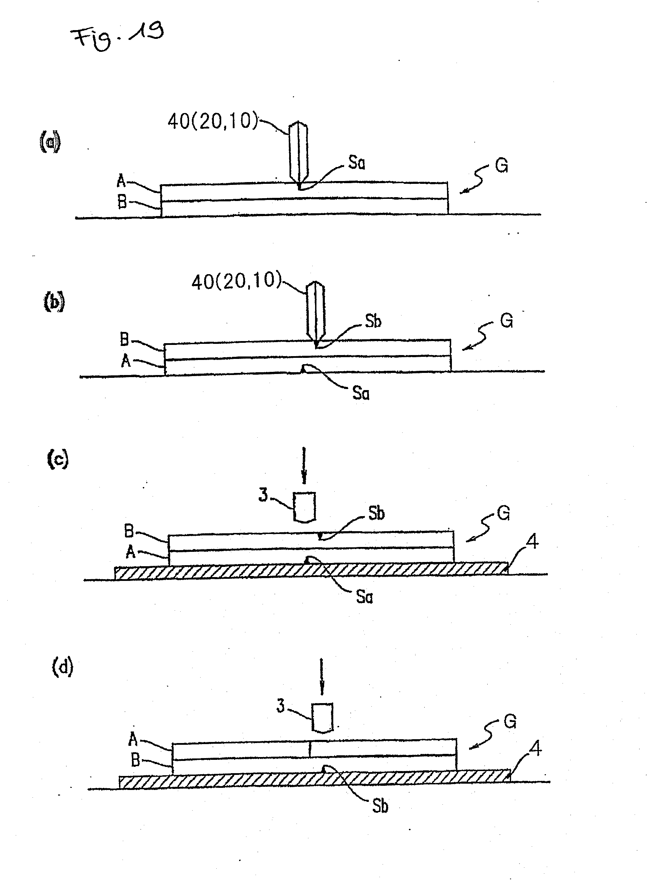

Figs 18 and 19 are diagrams illustrating a process for scribing and breaking a glass substrate; that is to say, respective processes for forming a scribe line in the surface of a glass substrate and breaking the glass substrate along the formed scribe line.

With reference to Figs 18 and 19, two examples of processes for scribing and breaking a glass substrate are described. Here, in the following description, a glass substrate G which is made up of bonded glass sheets and is to be used for a liquid crystal panel is used as an example; the glass substrate on one side is referred to as A side glass substrate and the glass substrate on the other side is referred to as B side glass substrate.

In the first example, (1) first, as shown in Fig 18(a), a glass substrate G is mounted on the scribe table of a scribing apparatus in such a manner that the A side glass substrate faces upward, and the A side glass substrate is scribed using a cutter wheel 10, so that a scribe line Sa is formed.
(2) Next, the above glass substrate G is turned over, and the above described glass substrate G is transferred to a breaking apparatus. Then, as shown in Fig 18(b), this breaking apparatus presses a breaking bar 3 against the B side glass substrate of glass substrate G that is mounted on a mat 4 along a line that faces scribe line Sa. As a result, a cracks expands upward from scribe line Sa in the A side glass substrate on the bottom, in such a manner that the A side glass substrate is broken along scribe line Sa.
(3) Next, the above described glass substrate G is transferred to the top of the scribing table of a scribing apparatus. Then, in the scribing apparatus, the B side glass substrate is scribed using cutter wheel 10, so that a scribe line Sb is formed, as shown in Fig 18(c).
(4) Next, the above described glass substrate G is turned over and transferred to a breaking apparatus. Then, as shown in Fig 18(d), a breaking bar 3 is pressed against the A side glass substrate of the above described glass substrate G that is mounted on mat 4 along a line that faces scribe line Sb. As a result, a crack expands upward from scribe line Sb in the B side glass substrate on the bottom, and the B side glass substrate is broken along scribe line Sb.

In this invention, the scribing and breaking system including the above described processes is referred to as SBSB system (S means scribe and B means break).

In addition, in the second example, (1) first, as shown in Fig 19(a), a glass substrate G is mounted on the scribe table of a scribing apparatus in such a manner that the A side glass substrate faces upward, and the A side glass substrate is scribed using a cutter wheel 10, so that a scribe line Sa is formed.
(2) Next, the above glass substrate G is turned over, the above described glass substrate G is mounted on a scribing table, and the B side glass substrate is scribed using cutter wheel 10, so that a scribe line Sb is formed (Fig 19(b)).
(3) Next, the above described glass substrate G is transferred to a breaking apparatus. Then, as shown in Fig 19(c), in this breaking apparatus, a breaking bar 3 is pressed against the B side glass substrate of glass substrate G that is mounted on a mat 4 along a line that faces scribe line Sa. As a result, a cracks expands upward from scribe line Sa in the A side glass substrate on the bottom, so that the A side glass substrate is broken along scribe line Sa.
(4) Next, the above described glass substrate G is turned over and, as shown in Fig 19(d), placed on a mat 4 in a breaking apparatus. Then, a breaking bar 3 is pressed against the A side glass substrate of the above described glass substrate G along a line that faces scribe line Sb. As a result, a cracks expands upward from scribe line Sb in the B side glass substrate on the bottom, so that the B side glass substrate is broken along scribe line Sb.

In this invention, the scribing and breaking system including the above described processes is referred to as SSBB system.

By carrying out the respective processes (1) to (4) in the two above described examples, glass substrate G can be scribed and broken into two in a desired location along a scribe line.

Here, one of the conditions under which a glass substrate is broken is creation of a blade surface in a rib form, referred to as "rib mark," when a vertical crack intermittently progresses at the time of scribing.

A rib mark is created when the load for pressing the cutter wheel against glass substrate G at the time of scribing (hereinafter referred to as "pressure for cutting") is set within an appropriate cutting range for the formation of an appropriate scribe line. When glass substrate G is scribed with a further high pressure for cutting, however, occurrence of chipping, hereinafter referred to as "chipping," and increase in horizontal cracks becomes significant on the surface of glass substrate G. When the appropriate cutting range for the pressure for cutting is small, it becomes difficult to set the pressure for cutting, and in the case where the lower limit value of the pressure for cutting is high, chipping and horizontal cracks easily occur. In this manner, it is preferable for the appropriate cutting range for the pressure for cutting to be large, and it is preferable for the lower limit value to be low.

### Disclosure of the Invention

### Problem to be Solved by the Invention

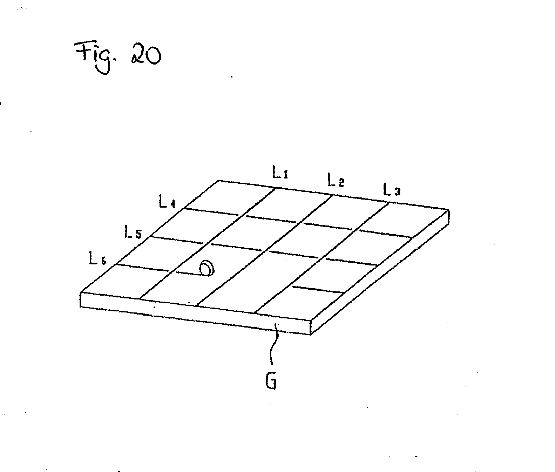

In the case where longitudinal-lateral cross scribing is carried out in such a manner that a number of scribe lines cross, forming intersections, unlike in the above described case where scribe lines are formed only in one direction in a glass substrate using a conventional scribing apparatus, a phenomenon which is referred to as intersection skipping sometimes occurs. This is a phenomenon where when scribe lines L4 to L6 are formed by a cutter wheel 20 passing through the initially formed scribe lines L1 to L3, the later formed scribe lines L4 to L6 are partially not formed in the vicinity of the intersections between these scribe lines, as shown in Fig 20.

In the case where such intersection skipping occurs in a glass substrate, when a glass substrate is scribed and broken in the above described breaking apparatus, the glass substrate is not broken correctly along the scribe lines, and consequently, a problem arises, such that a large amount of defects are created and the efficiency of production is significantly lowered.

The cause of intersection skipping is considered to be the following. That is to say, when scribe lines are initially formed, internal stress is created in the vicinity of the glass surface on both sides of scribe lines. Next, it is considered that when the cutter wheel passes through an initially formed scribe line, the force that is required for scribing and applied to the surface of the glass substrate in the vertical direction from the cutter wheel is reduced by the internal stress which is latent in the vicinity thereof, and as a result, the scribe line which is supposed to be formed afterward is not formed in the vicinity of the intersection.

Meanwhile, there is a defect such that when a scribe line is formed using a cutter wheel, a deep cut (vertical crack) cannot be gained in the surface of the glass substrate, and the cutter wheel easily slips on the surface of a glass substrate at the time of scribing, thus failing to form a normal scribe line which is as a scribe line ought to be.

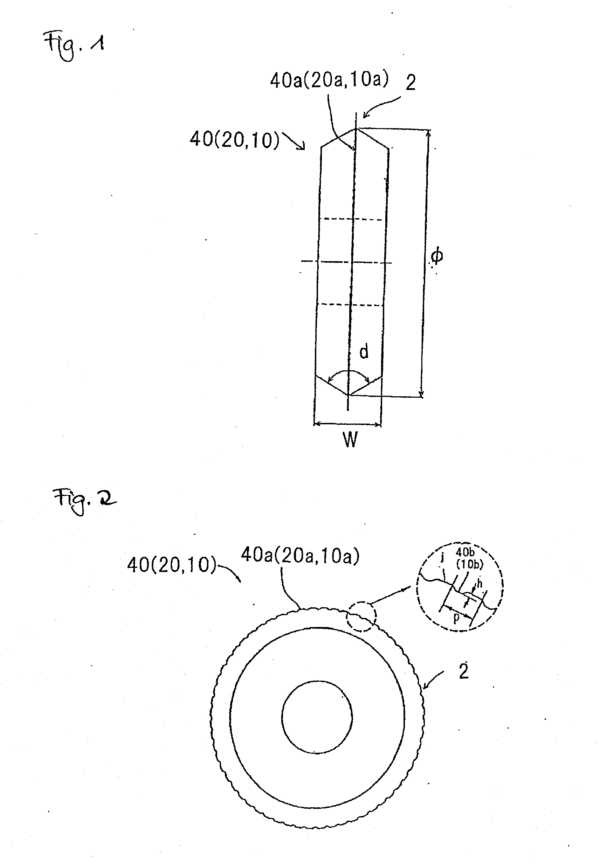

Figs 1 and 2 are schematic diagrams (including an enlarged diagram of one portion) showing the form of the blade edge of the below described conventional cutter wheel having high penetrability and the form of the blade edge of this invention.

Patent Document 2 discloses a cutter wheel 20 for scribing a brittle material substrate where a ridge line in a V shape is formed as a blade edge 2 along the circumference of a wheel in a disc form and a number of protrusions j in a predetermined form are formed by creating grooves 10b in the above described ridge line at approximately equal intervals, as shown in Figs 1 and 2. When a scribe line is formed using cutter wheel 20, cracks which are deep and vertical relative to the plate thickness of the glass substrate are created in the direction perpendicular to the surface of the glass substrate.

In the case where such a cutter wheel 20 having high penetrability is used, the above described intersection skipping and slipping on the surface of the glass substrate at the time of scribing can be prevented, and it is possible to simplify the breaking process after scribing. In some cases, it is possible to omit the breaking processes in the SBSB system shown in Figs 18(b) and 18(d) or the breaking processes in the SSBB system shown in Figs 19(c) and 19(d).

In recent years, use of glass substrates, originally for liquid display panels and the like, has been spreading to portable terminals, such as cellular phones, and the demand for reduction in weight for the sake of ease for carrying around has increased, and as a result, the thickness of glass substrates has been becoming thinner and thinner, the material for glass substrates has been improving in order to compensate for the accompanying reduction in rigidity, and it has become increasingly difficult to form excellent scribe lines in glass substrates using a cutter wheel 20 having high penetrability. In other words, glass substrates are easily broken when scribed under the same load as that for glass substrates having a conventional thickness. In the case where a glass substrate is scribed under a low load in order to prevent the glass substrate from being destroyed, it becomes difficult to form rib marks on the surface of the glass substrate, and it becomes difficult to break the glass substrate into unit substrates.

This invention is provided in view of these problems with the prior art, and an object of the invention is to provide a cutter wheel which allows for stable formation of a scribe line with high precision when a brittle material substrate is scribed and broken, even in the case where the thickness of the brittle material substrate is small, a method for scribing a brittle material substrate using the same, and a method for manufacturing a cutter wheel.

### Means for Solving Problem

The present inventors developed after diligent research a cutter wheel which can prevent intersection skipping and allows for stable formation of a scribe line with high precision even in the case where the thickness of a brittle material substrate is small, as well as a method for scribing a brittle material substrate using the same, and completed this invention.

That is to say, this invention provides a cutter wheel for scribing a brittle material substrate, where a ridge line in V shape is formed as a blade edge along the circumference of a wheel in disc form and a number of protrusions are formed along the above described ridge line at approximately equal intervals, characterized in that the outer diameter of the wheel is 1.0 mm to 2.5 mm, that the above described protrusions are formed around the entirety of the above described ridge line with a pitch of 8 µm to 35 µm, that the height of the above described protrusions 0.5 µm to 6.0 µm, and that the angle of the blade edge is 85 ° to 140 °.

Another aspect of this invention provides a method for scribing a brittle material substrate, where a cutter wheel of which the ridge line is formed in V shape as a blade edge along the circumference of a wheel in disc form and has a number of protrusions formed along the above described ridge line at approximately equal intervals is pressed against and rolled on a brittle material substrate, and thereby, a scribe line is formed on the surface of the brittle material substrate, characterized in that a cutter wheel where the outer diameter of the wheel is 1.0 mm to 2.5 mm, that the above described protrusions are formed around the entirety of the above described ridge line with a pitch of 8 µm to 35 µm, that the height of the above described protrusions 0.5 µm to 6.0 µm, and that the angle of the blade edge is 85 ° to 140 ° is used to scribe a brittle material substrate.

Still another aspect of this invention provides a method for scribing and breaking a brittle material substrate, characterized in that a scribe line is formed on a brittle material substrate using a cutter wheel, and that subsequently, a load is applied along the formed scribe line so that the brittle material substrate is broken.

Here, in accordance with a method for scribing and breaking a brittle material substrate of this invention, the above described brittle material substrate can be broken along the above described scribe line, that is to say, separated only by forming a scribe line in the brittle material substrate with the step of breaking omitted, and this method for scribing and breaking a brittle material substrate with the step of breaking omitted is also included in this invention.

### Effects of the Invention

A brittle material substrate is scribed using a cutter wheel of this invention, and thereby, intersection skipping can be prevented and a scribe line can be stably formed with high precision even in the case where the thickness of the brittle material substrate is small.

In accordance with a method for scribing a brittle material substrate of this invention, intersection skipping can be prevented and a scribe line can be stably formed with high precision even in the case where the thickness of the brittle material substrate is small.

A brittle material substrate of which the thickness is in a range from 0.4 mm to 0.7 mm is scribed with the blade edge of a cutter wheel to which a load of 0.03 MPa to 0.19 MPa is applied, and therefore, a scribe line can be stably formed with high precision with a relatively small pressure for cutting.

As for the brittle material substrate which is the object being broken, glass substrates for TFT liquid crystal panels made of non-alkaline glass and synthetic quartz glass can be cited as examples.

In accordance with a method for scribing a brittle material substrate of this invention, a cutter wheel of this invention is used, and thereby, the strength of the broken brittle material substrate can be increased. Here, in this invention, strength of a brittle material substrate means the strength against bending in the 4-point bending test defined in JIS R3420.

### Brief Description of the Drawings

Fig 1 is a front diagram showing a cutter wheel of this invention and a conventional cutter wheel as viewed in the direction perpendicular to the rotational axis;
Fig 2 is a side diagram of the cutter wheels of Fig 1;
Fig 3 is a diagram showing a line for scribing and breaking a liquid crystal panel in which a cutter wheel of this invention is used;
Fig 4 is a graph for evaluating the properties of the cutter wheel for scribing and breaking a glass substrate in Experiment 1;
Fig 5 is a table evaluating the properties of the cutter wheel for scribing and breaking a glass substrate in Experiment 2;
Fig 6 is a diagram illustrating the cause of the splinter in Experiment 2;
Fig 7 is a diagram illustrating the cause of the twist in Experiment 2;
Fig 8 is a table evaluating the properties of the cutter wheel for scribing and breaking a glass substrate in Experiment 3;
Fig 9 is a diagram showing an apparatus for testing the strength of glass against bending used in the test for the strength of glass against bending in Experiment 4;
Fig 10 is a graph plotting the results of the test for the strength of glass against bending gained for the respective cutter wheel samples used in Experiment 4 on a Weibull probability paper;
Fig 11 is a graph showing the ratio of occurrence of breaking mode as calculated from analysis of the respective broken surfaces of substrate samples which were finally broken in the test for the strength of glass against bending in Experiment 4 in relation with the cutter wheel samples;
Fig 12 is a graph plotting the results of the test for the strength of glass against bending gained for the respective cutter wheel samples used in Experiment 4 on a Weibull probability paper;
Fig 13 is a graph showing the ratio of occurrence of breaking mode as calculated from analysis of the respective broken surfaces of substrate samples which were finally broken in the test for the strength of glass against bending in Experiment 4 in relation with the cutter wheel samples;
Fig 14 is a graph plotting the results of the test for the strength of glass against bending gained for the respective cutter wheel samples used in Experiment 4 on a Weibull probability paper;
Fig 15 is a graph showing the ratio of occurrence of breaking mode as calculated from analysis of the respective broken surfaces of substrate samples which were finally broken in the test for the strength of glass against bending in Experiment 4 in relation with the cutter wheel samples;
Fig 16 is an enlarged front diagram showing the edge side of a blade edge of a cutter wheel for illustrating an example of a two-stage grinding system, which is a method for manufacturing a cutter wheel according to this invention;
Fig 17 is a front diagram showing a conventional scribing apparatus which is used for scribing;
Fig 18 is a diagram illustrating the steps of forming a scribe line in the surface of a glass substrate and breaking the glass substrate along the formed scribe line in a conventional SBSB system;
Fig 19 is a diagram illustrating the steps of forming a scribe line in the surface of a glass substrate and breaking the glass substrate along the formed scribe line in a conventional SSBB system; and
Fig 20 is a perspective diagram illustrating the phenomenon of intersection skipping which occurs at the time of cross scribing.

### Explanation of Symbols

- 1: scribing head
- 2: blade edge
- 3: breaking bar
- 10: cutter wheel (conventional)
- 20: cutter wheel (conventional)
- 20a: ridge line
- 20b: groove
- 40: cutter wheel (present invention)
- 40a: ridge line
- 40b: groove
- 100: scribing apparatus

### Best Mode for Carrying Out the Invention

In the following, the embodiments of this invention are described in detail in reference to the drawings.

Here, the form, quality, use and dimensions of the brittle material substrate of the present invention are not particularly limited, and a substrate may be made of a single substrate or two or more single substrates that are bonded together, and in addition, a thin film or a semiconductor material may be attached to or included on the surface or inside of this.

As for the material of the brittle material substrate of the present invention, glass, ceramics, silicon, sapphire and the like can be cited, and as for the application thereof, panels for flat panel displays, such as liquid crystal display panels, plasma display panels and organic EL display panels can be cited.

"Number of divided protrusions" in the present invention means the number of uniformly divided circumferences, that is, the number of protrusions in predetermined form that are formed in the ridge line in V shape, which is formed as the blade edge, along the circumference of the cutter wheel at appropriate intervals.

Though the following embodiments show examples of the form of cutter wheels of this invention, the cutter wheel of this invention is not limited to these.

A cutter wheel 40 according to an embodiment of this invention is described in reference to Figs 1 and 2. Fig 1 is a front diagram showing a cutter wheel 40 as viewed in the direction perpendicular to the rotational axis, and Fig 2 is a side diagram showing the cutter wheel of Fig 1.

Here, cutter wheel 40 can be mounted on a scribe head 1 of conventional scribing apparatus 100 that is described in reference to Fig 17.

As shown in Fig 1, cutter wheel 40 has a disc form with an outer diameter of the wheel of Φ and a thickness of the wheel of W, and a blade edge 2 having a blade edge angle of α formed along the outer periphery of the wheel.

Furthermore, as shown in Figs 1 and 2, ridge line 40a for forming blade edge 2 of cutter wheel 40 is uneven. That is to say, in this example, grooves 40b in U shape or V shape are formed, as shown in the enlarged diagram of one portion of Fig 2. Grooves 40b are formed by cutting pieces of a depth h with a pitch P from smooth ridge line 40a. As a result of the formation of these grooves 40b, protrusions j having a height h (corresponding to ridge line 40a) are formed with a pitch P. Here, grooves 40b have a size on a micron scale, which is not visible by the naked eye.

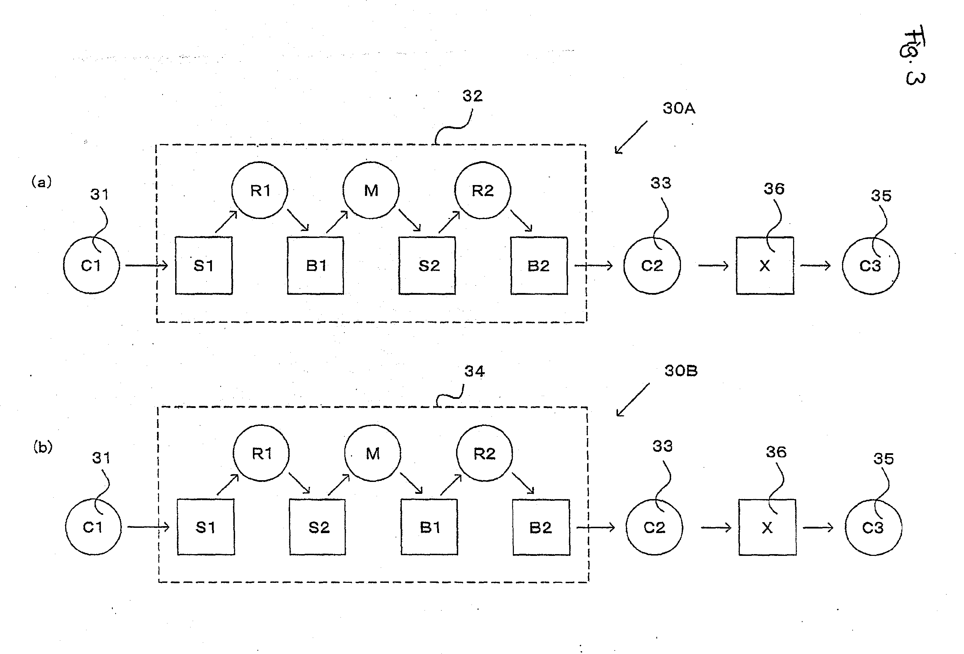

Fig 3 is a diagram showing lines 30A and 30B for scribing and breaking a liquid crystal panel where cutter wheel 40 of this invention is used. Fig 3(a) shows line 30A for implementing the SBSB system shown in Fig 18, and Fig 3(b) shows line 30B for implementing the SSBB system shown in Fig 19.

As shown in Fig 3, lines 30A and 30B for scribing and breaking a liquid crystal panel are formed of apparatuses for scribing and breaking liquid crystal panels 32 and 34, chamfer apparatuses 86 and transfer robots 31, 33 and 35, which are provided between these apparatuses.

As shown in Fig 3(a), an apparatus for scribing and breaking liquid crystal panels 32 is formed of a scribing apparatus S (S1 and S2) and a breaking apparatus B (B1 and B2) for implementing an SBSB system, transfer robots for turning over glass substrates R1 and R2 which turn over and transfer glass substrates G, and a transfer robot M which transfers glass substrates G without turning them over.

As shown in Fig 3(b), an apparatus for breaking liquid crystal panels 34 is formed of a scribing apparatus S (S1 and S2) and a breaking apparatus B (B 1 and B2) for implementing an SSBB system, as well as transfer robots for turning over glass substrates R1 and R2 and a transfer robot M, which transfers glass substrates G in the same manner as in Fig 3(a).

The respective scribing apparatuses S1 and S2 have the same configuration as the apparatus of scribe apparatus 100 in Fig 17, and a cutter wheel 30 is mounted on chip holder 4 instead of cutter wheel 10 of Fig 17.

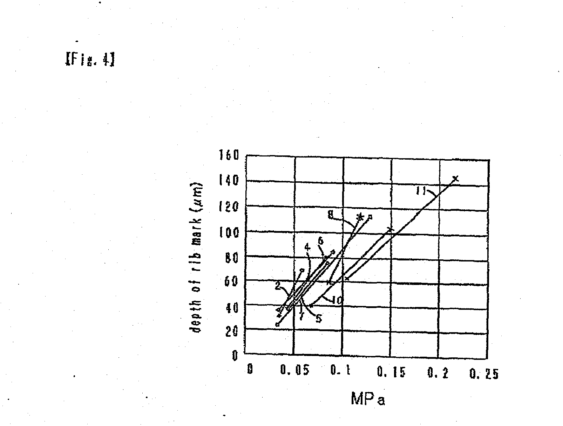

In reference to Figs 4 to 15, experiments which are carried out to evaluate the properties for scribing and breaking glass substrates of the cutter wheels according to this invention are described together with the results thereof.

### [Experiment 1]

In Experiment 1, the relationship between the depth of a rib mark which is formed by a blade 2 of a cutter wheel 40 and a scribing pressure region (range where subsequent breaking can be achieved) under pressure for cutting when a glass substrate is scribed and broken using cutter wheel 40 was measured. Here, the above described "rib mark" means a fractured surface in a rib form which is created as a result of intermittent progress of a crack, and is a visible mark which becomes an indicator of the formation of a good scribe line.

The conditions for scribing and breaking are described in the below.

Glass substrate that is object of scribing and breaking : non-alkaline glass (single glass substrate having thickness of 0.4 mm)

Cutter wheel: material: sintered diamond (polycrystalline diamond: PCD)
outer diameter ϕ: 2.0 mm
thickness W: 0.65 mm
diameter of hole for axis: 0.8 mm
pitch of protrusions P: 8.7 µm to 34.1 µm (circumference divided into 230 to 900 equal portions)
height of protrusions h: 0.5 µm to 3 µm
angle of end of blade α: 90 ° to 115 °

Scribing apparatus: MS type, made by Mitsuboshi Diamond Industrial Co., Ltd.

Conditions for setting: invasion depth of the cutter wheel in glass substrate: 0.1 mm
scribing speed: 300 mm/sec
pressure for cutting: 0.03 MPa to 0.22 MPa (pressure for scribing means pressure applied to cutter wheel for formation of scribe lines)

Table 1 shows the properties of the blade of cutter wheels used as samples.

**[Table 1]**

| sample No. | angle of end of blade (° ) | number of divisions [pitch (*µ*m)] | height of protrusions (*µ*m) |
|---|---|---|---|
| 1 | 90 | 900 [ 7.0] | 0.5 |
| 2 | 90 | 530 [11.8] | 2.0 |
| 3 | 90 | 470 [13.4] | 2.0 |
| 4 | 90 | 420 [15.0] | 3.0 |
| 5 | 100 | 530 [11.8] | 2.0 |
| 6 | 100 | 470 [13.4] | 2.0 |
| 7 | 100 | 420 [15.0] | 3.0 |
| 8 | 100 | 230 [27.8] | 3.0 |
| 9 | 105 | 420 [15.0] | 3.0 |
| 10 | 115 | 470 [13.0] | 2.0 |
| 11 | 115 | 420 [15.0] | 8.0 |

Fig 4 shows the results of evaluation of the properties of the cutter wheels in Experiment 1 for scribing and breaking a glass substrate. That is to say, the relationship between the depth of a rib mark that is formed by the blade of a cutter wheel and the scribing pressure region where subsequent breaking can be achieved was measured for each cutter wheel.

As is clear from Fig 4, it was found that a relatively deep rib mark was formed and a wide scribing pressure region where subsequent breaking can be achieved was found for scribing and breaking with the cutter wheels of samples Nos. 7, 8, 10 and 11, particularly the cutter wheels of samples Nos.7, 10 and 11.

### [Experiment 2]

In Experiment 2, a glass substrate was cross scribed using a cutter wheel, and the state was observed on a surface edge at an intersection of scribe lines on the glass substrate that was cross scribed. The conditions for scribing and breaking and cutter wheels 40 used as samples were the same as those shown in Table 1, as in Experiment 1.

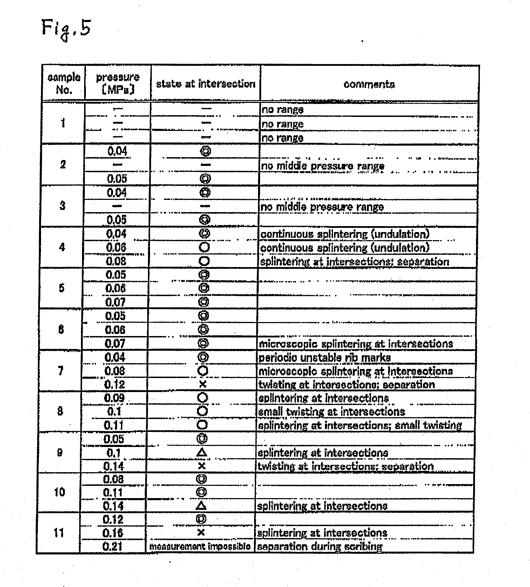

Fig 5 shows the results of evaluation of the properties for breaking in Experiment 2. That is to say, the relationship between the state on the surface edge at an intersection of scribe lines on a glass substrate that was cross scribed and the scribing pressure region where subsequent breaking can be achieved was measured for each cutter wheel of the above described samples Nos. 1 to 11.

In Fig 5, "⊚" indicates very good condition, "○" indicates good condition, "Δ" indicates a state where the degree of damage is low, "×" indicates a state where the degree of damage is high, and "-" indicates a state where subsequent breaking is impossible.

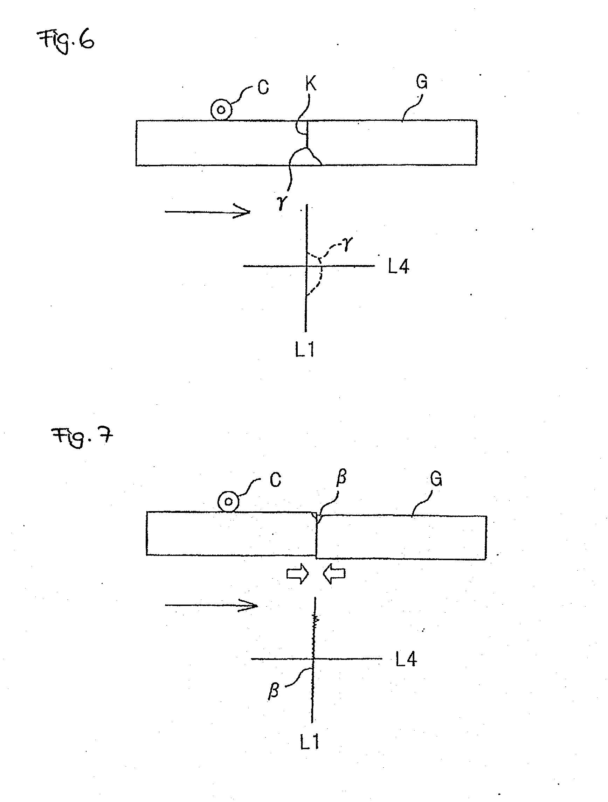

Figs 6 and 7 are diagrams illustrating damage in the glass substrate, for example the below described "splintering" or "twisting," and the upper portion in each diagram shows a cross section along scribe line L4 which is formed after scribe line L1 shown in the lower portion in each diagram, and the lower portion in each diagram shows a plan view,

"Splintering" described in the comments column in Fig 5 means a phenomenon where a defect as shown by γ in Fig 6 occurs, so that when cutter wheel C makes contact with and rolls over a glass substrate and progresses in the direction of the arrow in the diagram while forming scribe line L4, and when it passes through scribe line L1 that was already provided, scribe line L1 in a half-separated state (state where a vertical crack K reaches approximately 90 % of the thickness of` glass substrate G) extends in the diagonal direction in the vicinity of the rear surface of glass substrate G, as shown in Fig 6.

In addition, "twisting" means a phenomenon where a defect as shown by 6 in Fig 7 occurs, so that when cutter wheel C makes contact with and rolls over a glass substrate and progresses in the direction of the arrow in the diagram while forming scribe line L4, and before the cutter wheel passes scribe lines L1 to L3 which were already provided, as shown in Fig 20 (Fig 7 only shows scribe line L1), portions of glass substrate G in a half-separated state (state where a vertical crack K reaches approximately 90 % of the thickness of glass substrate G) hit each other, causing microscopic chipping (missing portions) in the respective surface edge portions, as shown in Fig 7.

In Experiment 2, as shown in Fig 5, the cutter wheels of samples Nos. 2, 3, 5, 6, 9, 10 and 11, from among these, particularly the cutter wheels of samples Nos. 3, 5, 6 and 10 provided good intersections over a relatively wide scribing pressure region where subsequent breaking can be achieved.

It can be seen from Experiments 1 and 2 that defects such as splintering and twisting can be prevented at intersections and on end surfaces, so that the strength at the surface edge of glass substrate G after scribing and breaking is increased, by using a cutter wheel of which the outer diameter is 1.0 mm to 2.5 mm, the above described protrusions are formed around the entire periphery of the above described ridge line with a pitch of 8 µm to 35 µm, the height of the above described protrusions is 0.5 µm to 6.0 µm, and the angle of the blade is 90 ° to 115 °. Furthermore, as a result of observation when the angle range was widened, it was confirmed that the strength on the end surfaces increased in a range of 85 ° to 140 °.

### [Experiment 3]

In Experiment 3, a glass substrate was cross scribed using a cutter wheel. The properties for scribing and breaking a glass substrate were measured for each cutter wheel in relation to the scribing pressure region where subsequent breaking can be achieved, in terms of the state at a surface edge at an intersection of the glass substrate that was cross scribed and the depth (penetrability) of the vertical crack in the glass substrate.

The conditions for scribing and breaking are described in the below.
Glass substrate that is object of scribing and breaking: non-alkaline glass (single glass substrate having a thickness of 0.7 mm)
Cutter wheel: material: sintered diamond (PCD)
outer diameter ϕ: 2.0 mm
thickness W: 0.65 mm
diameter of hole for axis: 0.8 mm
pitch of protrusions P: 17.4 µm (circumference divided into 360 equal portions)
height of protrusions h: 3 µm
angle of end of blade α: 110 °, 115 °, 120 °
Scribing apparatus: MS type, made by Mitsuboshi Diamond Industrial Co., Ltd.
Conditions for setting: invasion depth of the cutter wheel in glass substrate: 0.1 mm
scribing speed: 300 mm/sec
pressure for scribing : 0.04 MPa to 0.21 MPa

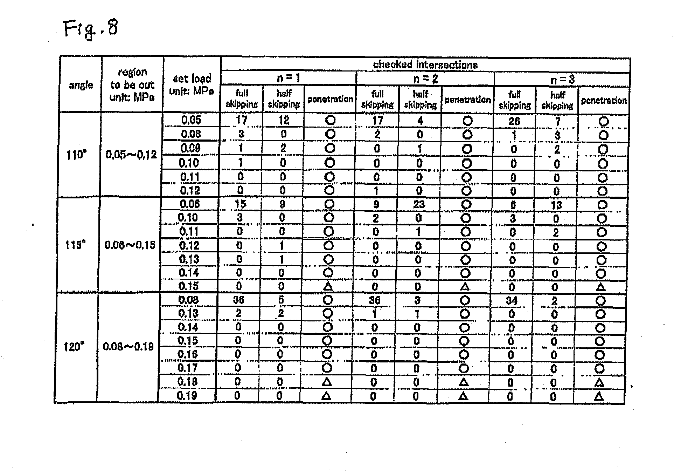

Fig 8 shows the form of the blades of cutter wheels used as samples, as well as the results of scribing and breaking using these.

Fig 8 shows the results of evaluation of properties for scribing and breaking in Experiment 3, and in accordance with the method for evaluation, 10 lines in linear form were cross scribed in each of the direction of the X axis and in the direction of the Y axis, which are perpendicular to each other with a pitch of 8 mm × 8 mm on the surface of a glass substrate, the state of intersection skipping was evaluated for 100 intersections that were formed. In the table, n = 1, n = 2 and n = 3 indicate the number n of evaluations (time of evaluations repeated each time that a new cutter wheel was used).

In the column of checked intersections in Table 8, "full skipping" means a case where no line was scribed before and after the intersection in the direction of progress of the scribe line, and "half skipping" means a case where no line was scribed either before or after the intersection in the direction of progress of the scribe line.

In the sub-columns "penetration" in the column of checked intersections in Fig 8, symbol ○ and symbol Δ indicate a case where vertical cracking stayed within 10 % to 20 % of the thickness of the glass substrate and did not penetrate deeply, and a case where vertical cracking reached no less than 90 % of the thickness of the glass substrate, respectively.

As is clear from Fig 8, in the case where the pressure for scribing was set at 0,08 MPa to 0.17 MPa, intersection skipping could be prevented to a great extent, and excessive penetration of the blade into the glass substrate could be prevented.

In addition, a relatively wide scribing pressure region where subsequent breaking can be achieved when the angle α of the blade was in a range from 115 ° to 120 °. In this case also, improvement in terms of splintering and twisting could be confirmed in a range from 85 ° to 140 ° through observation, by further widening the range of the angle.

It was found from Experiment 3 that defects such as splintering and twisting can be prevented at intersections and at surface edges, so that scribe lines can be stably created with high precision even in the case where the thickness of the brittle material substrate is small, by using a cutter wheel of which the outer diameter is 1.0 mm to 2.5 mm, the above described protrusions are formed along the entire circumference of the above described ridge line with a pitch of 8 µm to 35 µm, the height of the above described protrusions is 0.5 µm to 6.0 µm and the angle of the blade is 85 ° to 140 °.

As is clear from the above described Embodiment, a cutter wheel 40 of which the pitch of protrusions is smaller than that of the above described cutter wheel 20 of a conventional highly penetrative type (that is to say, the number of divisions is increased in the circumference) is used for scribing, and thereby, the strength of the glass substrate at surface edges along which a scribe line is formed and breaking is achieved is increased, and thus, good scribe lines can be formed even in a thin substrate.

In addition, the scribing pressure region to be cut where good scribe lines can be formed is large, and therefore, it becomes difficult to be affected by the difference in the degree of wear of the cutter wheel and in locations on the glass substrate where a scribe line is formed, and formation of stable scribe lines becomes possible for a long period of time.

By selectively using cutter wheel 20 of the conventional highly penetrative type and cutter wheel 40 of the present invention, good scribe lines can be formed on substrates which are an object of scribing of a wide range of thicknesses, from thin to thick.

Here, those skilled in the art can easily understand that the strength at a surface edge that is created after the glass substrate to be broken along the formed scribe lines is broken can be increased by reducing the pitch of protrusions and reducing the height of protrusions.

In addition, good scribe lines can be formed even in a substrate of which the thickness is no greater than 0.4 mm by adjusting the height and pitch of the protrusions of cutter wheel 40, and unnecessary cracking and expansion of such cracking can be prevented after breaking.

### [Experiment 4]

In Experiment 4, plain glass substrates were cross scribed using cutter wheels having a different number of divisions (pitch) of protrusions along the respective portions of the blades, as well as different heights of protrusions (hereinafter referred to as sample cuter wheels), and after that, the glass substrates were broken, so that separated (scribed and broken) glass substrates, which are samples, (hereinafter referred to as sample substrates) were gained.

Testing for strength of glass against bending was conducted on the gained sample substrates, and the form of protrusions and the strength of the glass substrates were evaluated relative to each other.

The conditions for scribing and breaking are described in the below.

Glass substrate that is object of scribing and breaking:
A) non-alkaline glass (single glass substrate having thickness of 0.63 mm)
   glass density: 2.37
   dimensions of plain glass substrate: 370 mm × 470 mm sample substrate: 100 mm × 15 mm
B) alkaline glass (single glass substrate having thickness of 0.70 mm) glass density: 2.50
   dimensions of plain glass substrate: 800 mm × 400 mm sample substrate: 100 mm × 15 mm
C) non-alkaline glass (single glass substrate having thickness of 0.70 mm)
   glass density: 2.54
   dimensions of plain glass substrate: 360 mm × 460 mm
   sample substrate: 100 mm × 15 mm
   Sample cutter wheel: material: sintered diamond (PCD)
   outer diameter ϕ: 2.0 mm
   thickness W: 0.65 mm
   diameter of hole for axis: 0.8 mm
   pitch of protrusions P: 17.4 µm to 57.1 µm (circumference divided into 110 to 360 equal portions)
   height of protrusions h: 3 µm to 10 µm
   angle of blade α:125 °
   Scribing apparatus: MS type, made by Mitsuboshi Diamond Industrial Co., Ltd.
   Conditions for setting for scribing: outside-outside scribing method (method where a sample cutter wheel is positioned outside of a plain glass substrate and a scribe line is formed from one end surface portion of the substrate to the other end surface portion of the substrate)
   set invasion depth of cutter wheel in glass substrate: 0.15 mm
   scribing speed: 300 mm/sec
   pressure for cutting: 0.22 MPa to 0.25 MPa

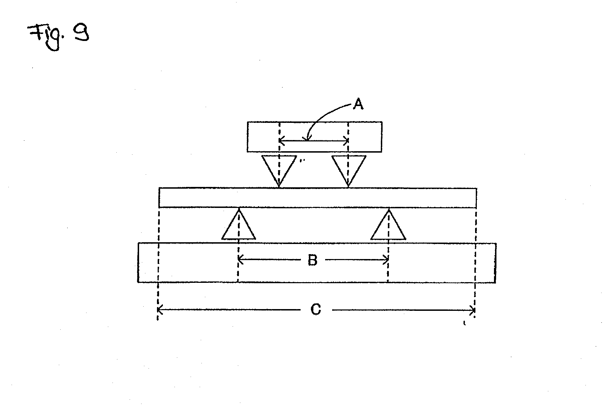

Fig 9 shows the apparatus for testing the strength of glass against bending which was used in testing the strength of glass against bending.

Furthermore, the test conditions for testing the strength of glass against bending are shown in the following.
Testing apparatus: EzTest/CE, made by Shimadzu Corporation
Method for testing: four-point bending test following JIS R8420
distance between fulcrums in upper portion A: 20 mm
distance between fulcrums in lower portion B: 60 mm
length of one sample substrate C: 100 mm

Table 2 shows the respective values for the form of the used sample cutter wheels, the set pressure for scribing and the amount of rib mark (depth of rib mark). Here, samples No. 1 and 2 in the following Table 2 are conventional cutter wheels having high penetrability (cutter wheels described in Patent Document 2), and samples No. 3 to 8 are cutter wheels of the present invention.

**[Table 2]**

| sample No. | form of blade | pressure for cutting [MPa] | amount of rib mark [*µ*m] |
|---|---|---|---|
| | number of divisions (pitch [*µ*m]) / height of protrusions [*µ*m] | | |
| 1 | 110 divisions (57.1)/10 | 0.23 | 104.7 |
| 2 | 135 divisions (46.5)/10 | 0.24 | 101.0 |
| 3 | 140 divisions (44.9)/7 | 0.24 | 101.3 |
| 4 | 170 divisions (36.9)/5 | 0.24 | 100.3 |
| 5 | 230 divisions (27.3)/3 | 0.25 | 99.67 |
| 6 | 360 divisions (17.4)/3 | 0.25 | 99.30 |
| 7 | 275 divisions (22.8)/3 | 0.22 | 99.30 |
| 8 | 255 divisions (24.6)/3 | 0.22 | 99.30 |

The concrete procedure for Experiment 4 is described in the following.

First, one surface of a plain glass substrate was cross scribed using sample cutter wheels 1 to 6 in Table 2. At this time, a scribe line was formed under the set pressure for cutting in Table 2, so that a rib mark having a reference depth of 100 µm was formed in each plain glass substrate, Here, first, a sample cutter wheel was positioned on the outside of a plain glass substrate, and then, scribe lines were formed from one end surface portion of the substrate to the other end surface portion of the substrate (outside-outside scribing method). The depth of actual rib marks formed under respective set pressures for cutting is shown in Table 2 as "amount of rib mark." After that, the plain glass substrate was broken manually, and thus, a number of sample substrates (100 mm × 15 mm) were gained.

Next, a test for the strength of glass against bending was conducted on each of the gained sample substrates using the apparatus for testing the strength of glass against bending shown in Fig 9.

In the test for the strength of glass against bending, sample substrates were supported when the test was carried out, so that the surface on the side where scribe lines were formed as a result of the above described cross scribing faced the lower surface side in the diagram.

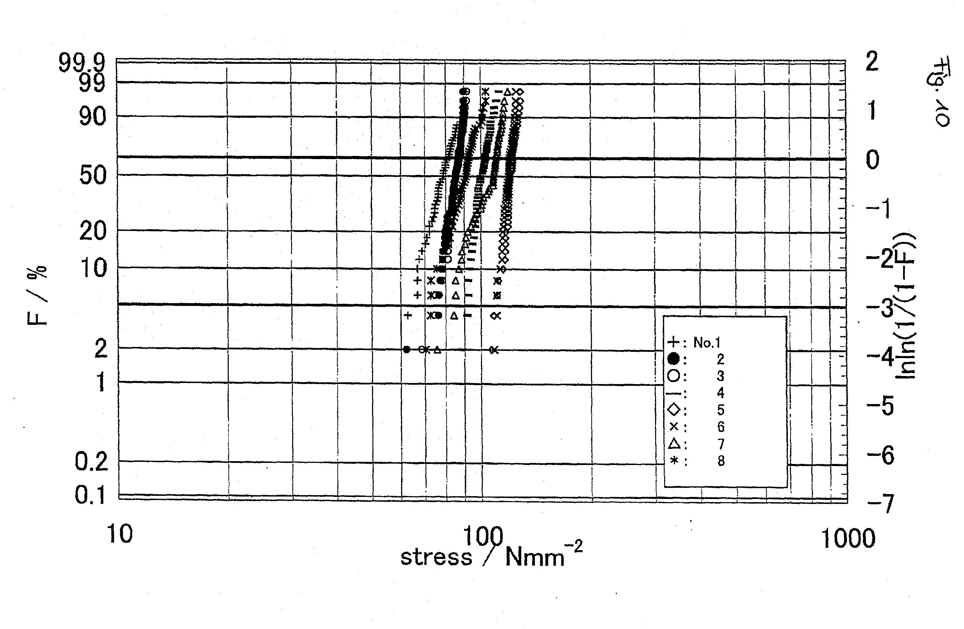

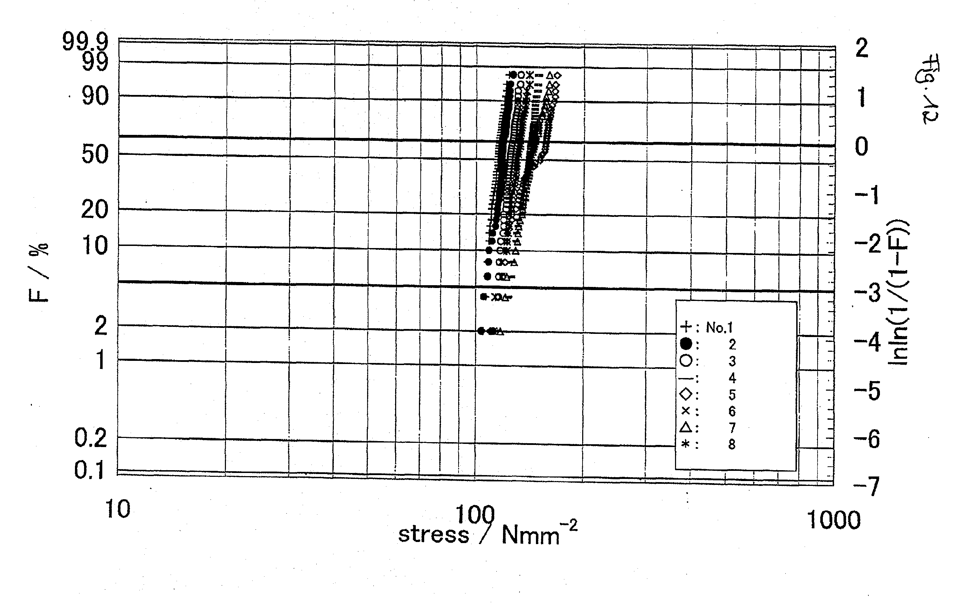

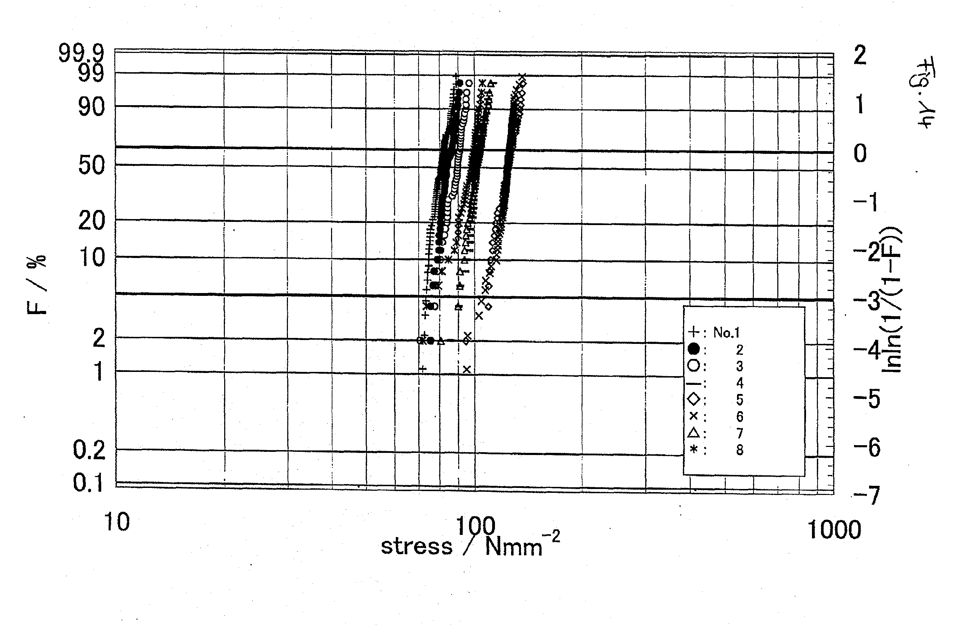

The numeric values for the respective sample substrates for each sample cutter wheel gained through testing of the strength of glass against bending (results of test of strength of glass against bending) were plotted on Weibull probability paper. The results are shown in Figs 10, 12 and 14. Fig 10 shows the results when the glass substrates which were the object of testing were made of A) non-alkaline glass, Fig 12 shows the results when the glass substrates which were the object of testing were made of B) alkaline glass, and Fig 14 shows the results when the glass substrates which were the object of testing were made of C) non-alkaline glass.

In addition, the respective broken surfaces of the sample substrates which were finally broken in the testing of the strength of glass against bending were analyzed, and the ratio of occurrence of broken mode was calculated from the analysis relative to sample cutter wheels 1 to 8.

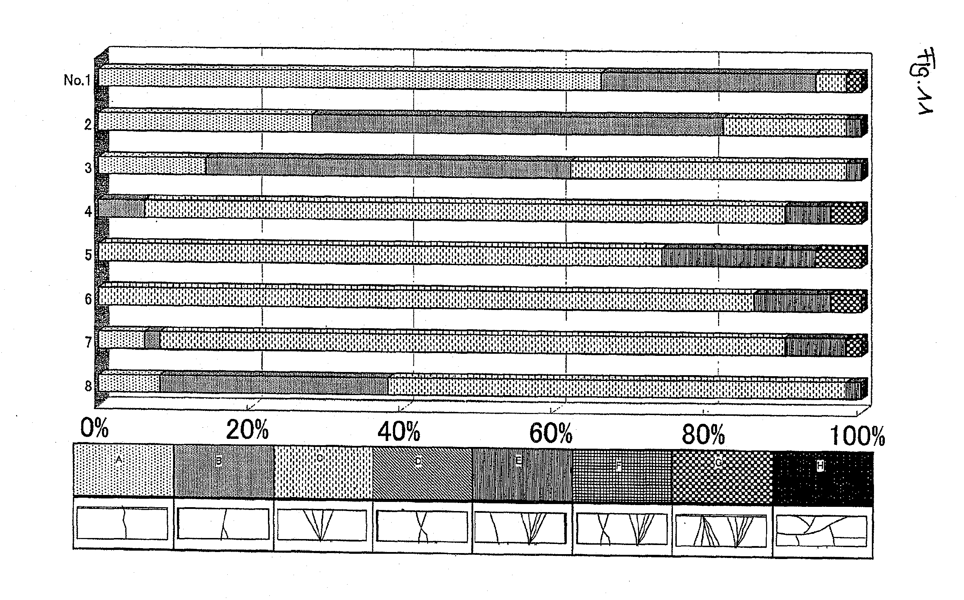

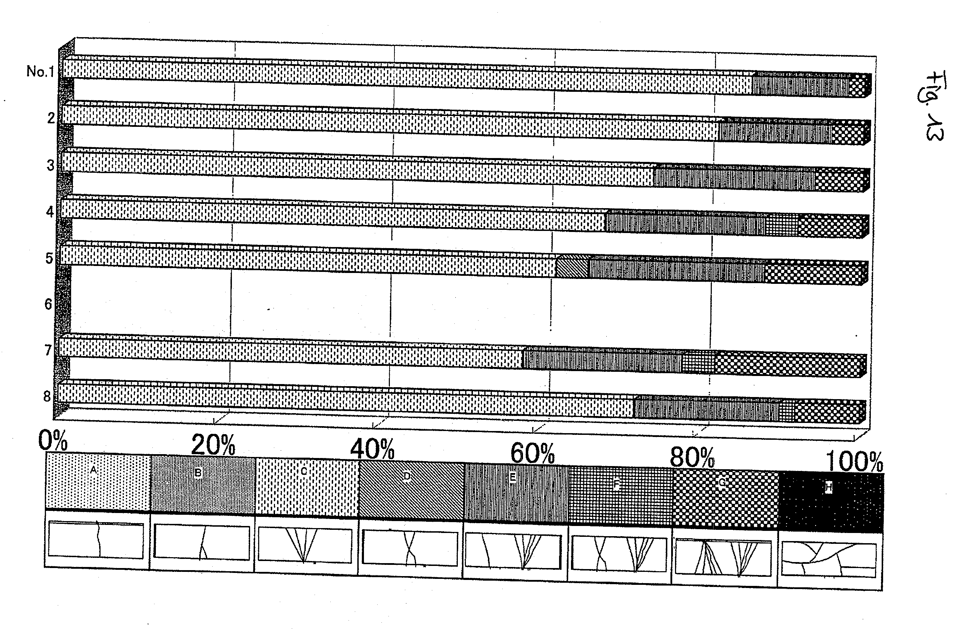

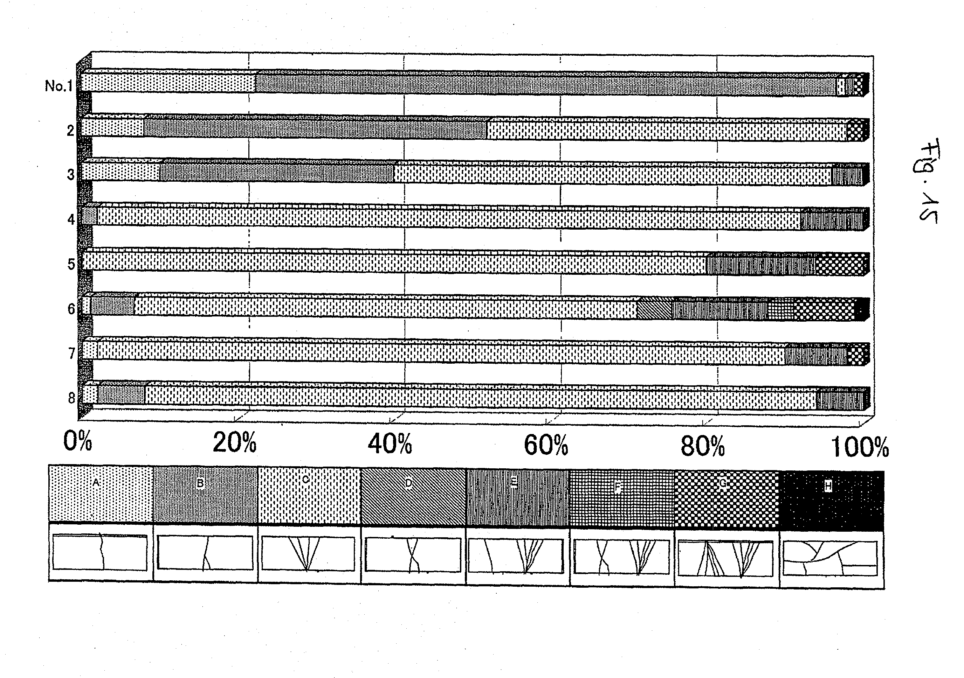

The results are shown in Figs 11, 13 and 15. Fig 11 shows the results when the glass substrates which were the object of testing were made of A) non-alkaline glass, Fig 13 shows the results when the glass substrates which were the object of testing were made of B) alkaline glass, and Fig 15 shows the results when the glass substrates which were the object of testing were made of C) non-alkaline glass.

Here, it is shown that as the breaking mode gets closer to the right from the left in the diagram (to the mode H side from the mode A side), the strength of the sample substrate against breaking is higher.

As is clear from Figs 10, 12 and 14, as the number of divisions of protrusions increases and the height of protrusions is set smaller, rather than greater, in the sample cutter wheels used for scribing, the strength of the gained sample substrates tends to become higher.

In addition, as is clear from Figs 11, 13 and 15, as the number of divisions of protrusions increases and the height of protrusions is set smaller, rather than greater, in the sample cutter wheels used for scribing, the strength at the surface edge of the sample substrates which were finally broken in the test of the strength of glass against bending becomes higher.

As can be understood from Experiment 4, in the case where a scribe line is formed in a glass substrate using a sample cutter wheel of the present invention, where the number of divisions of protrusions is great and the height of protrusions is set low, glass substrates which are scribed and broken through subsequent breaking and finally gained as sample substrates have higher strength against bending and higher strength at the surfaces edges in comparison with the case where a conventional cutter wheel having high penetrability (cutter wheel described in Patent document 2) is used.

### [Experiment 5]

In Experiment 5, when bonded glass substrates were scribed and broken by using a cutter wheel 40 of the present invention, the thickness of the bonded glass substrates and the relationship between the condition of the cutter wheel and the scribing pressure region where subsequent breaking can be achieved were measured.

According to the method for cutting the bonded glass substrates, as shown in Fig 19, glass substrate G was placed on top of the scribing table of a scribing apparatus so that the A side glass substrate faced upward, and a scribe line Sa was formed on the A side glass substrate using a cutter wheel 30, and then, the above described glass substrate G was turned over, after which the above described glass substrate G was placed on the scribing table, and the B side glass substrate is scribed using the same cutter wheel 30, so that a scribe line Sb was formed (hereinafter referred to as SS system).

The scribing pressure region where subsequent breaking can be achieved is shared by the scribing pressure region where subsequent breaking can be achieved on the A side glass substrate (made of the lower limit value and upper limit value) in the SS system and the scribing pressure region where subsequent breaking can be achieved on the B side glass substrate (made of the lower limit value and upper limit value) was calculated, and this was assumed to be the scribing pressure region of the bonded glass substrates where subsequent breaking can be achieved, and the results of measurement of this lower limit value and upper limit value are shown.

The conditions for scribing and breaking are described in the below.

Bonded glass substrates that are object to be scribed and broken:
alkaline glass and non-alkaline glass
Thickness of glass substrates: 0.2 mm to 0.35 mm (thickness of respective glass substrates on A side glass substrate and B side glass substrate)
Cutter wheel: material: sintered diamond (PCD)
   outer diameter ϕ: 2.0 mm
   thickness W: 0.65 mm
   diameter of hole for axis: 0.8 mm
   pitch of protrusions P: 17.4 µm (circumference divided into 360 equal portions)
   height of protrusions h: 3 µm
   angle of end of blade α: 95 ° to 120 °
Scribing apparatus: MS type, made by Mitsuboshi Diamond Industrial Co., Ltd.
Conditions for setting: invasion depth of cutter wheel in glass substrate: 0.1 mm
   scribing speed: 200 mm/sec
   pressure for cutting: 0.04 MPa to 0.18 MPa

Table 3 shows the thickness and the type of the bonded glass substrates which were used as a sample, and the condition at the blade of cutter wheel, as well as the lower limit value and the upper limit value of the scribing pressure region where subsequent breaking can be achieved in the bonded glass substrates.

Here, in Table 3, "glass thickness" means the thickness of respective substrates; the A side glass substrate and the B side glass substrate, which form the bonded glass substrates. "↑" means "same as above."

**[Table 3]**

| sample No. | glass thickness (mm) | type of glass | angle of end of blade (° ) | lower limit of scribing pressure (MPa) | lower limit of scribing pressure (MPa) |
|---|---|---|---|---|---|
| 1 | 0.2 | alkaline | 110 | 0.04 | 0.08 |
| 2 | ↑ | ↑ | 115 | 0.04 | 0.10 |
| 3 | ↑ | ↑ | 120 | 0.06 | 0.12 |
| 4 | 0.2 | non-alkaline | 95 | 0.06 | 0.12 |
| 5 | ↑ | ↑ | 100 | 0.07 | 0.13 |
| 6 | ↑ | ↑ | 105 | 0.09 | 0.12 |
| 7 | 0.3 | ↑ | 100 | 0.04 | 0.12 |
| 8 | ↑ | ↑ | 105 | 0.06 | 0.14 |
| 9 | ↑ | ↑ | 110 | 0.08 | 0.16 |
| 10 | 0.33 | ↑ | 100 | 0.07 | 0.10 |
| 11 | ↑ | ↑ | 105 | 0.08 | 0.17 |
| 12 | ↑ | ↑ | 110 | 0.09 | 0.18 |
| 13 | 0.35 | ↑ | 100 | 0.07 | 0.09 |
| 14 | ↑ | ↑ | 105 | 0.08 | 0.16 |
| 15 | ↑ | ↑ | 110 | 0.10 | 0.18 |

As is clear from Table 3, in the case where the bonded glass substrates made of different materials and having a different thickness are scribed by using a cutter wheel 40, a wide and relatively low scribing pressure region where subsequent breaking can be achieved was gained.

### [Other Embodiments]

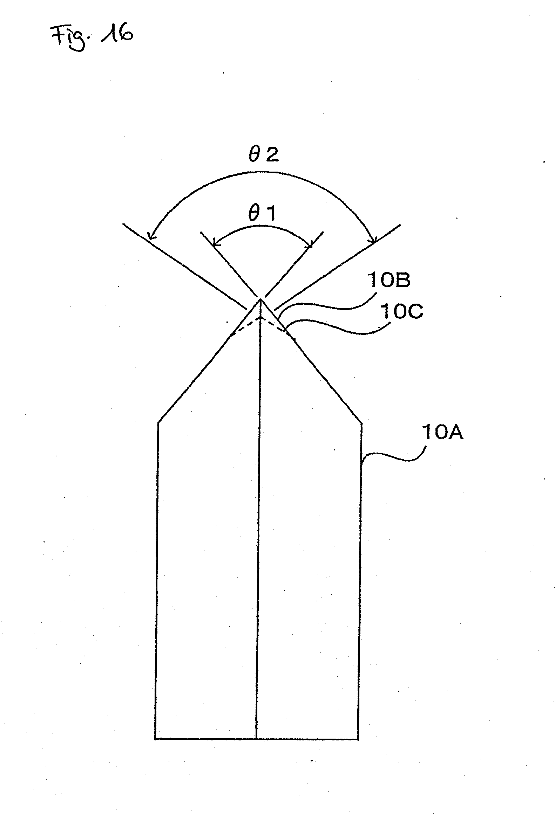

Fig 16 is an enlarged front diagram showing the edge side of the blade of a cutter wheel 40 in order to illustrate a method for manufacturing cutter wheel 40 according to one example of this invention. The end of the blade is first formed so as to have a ridge line portion 20a in V shape along the circumference of a wheel in disc form, and then, protrusions (and grooves 40b) are created in ridge line portion 40a, as shown in Figs 1 and 2, so that cutter wheel 40 is provided.

In this embodiment, the description of formation of protrusions (and grooves 40b) are omitted in the description of a method for forming the edge of the blade. For the formation of protrusions (and grooves 40b), please refer to the description in Japanese Patent No. 3074143.

A method for forming a blade of cutter wheel 40 according to this invention (hereinafter referred to as "two-stage grinding system") is concretely described in reference to Fig 16.

First, the blade of wheel 10A in disc form is roughly ground, so that at least one angle θ1 of the blade is formed (end of blade having the contour shown by the solid line in the figure).

In the case where a cutter wheel 40 having an angle θ1 of the blade is required, the above described wheel 10A in disc form of which the end of the blade has been roughly ground is further ground and finished, so that a wheel 10B having an angle θ1 of the end of the blade is formed. Next, protrusions (and grooves 40b) are created in this wheel 10B according to the above described method, and thereby, a cutter wheel 40 having an angle θ1 of the end of the blade is gained.

In the case where a cutter wheel 40 having an angle θ2 of the end of the blade is required, the above described wheel 10A in disc form of which the end of the blade has been roughly ground is ground and finished, so that a wheel 10C having an angle θ2 of the end of the blade is formed (end of blade having contour shown by broken line in the figure). Next, protrusions (and grooves 40b) are created in this wheel 10C according to the above described method, and thereby, a cutter wheel 40 having an angle θ2 of the end of the blade is gained.

As described above, if a number of cutter wheels 40 of which the end of the blade has been finished in advance so as to have an angle θ1 are stocked as standard products (stable demand can be expected), cutter wheels 30 of a variety of angles (θ2...) can be manufactured in a short period of time by carrying out only slight finish grinding, and therefore, the time for delivery can be greatly shortened, and a production system which is appropriate for production of multiple models in smaller lots can be established.

Here, the above described "two-stage grinding system" can be applied for cutter wheel 10 described in Patent Document 1 (that is to say, a cutter wheel where a ridge line portion in V shape is formed as the end of the blade along the circumference of the wheel in disc form) and cutter wheel 20 described in Patent Document 2 (that is to say, a cutter wheel where a number of protrusions in predetermined form are formed along the above described ridge portion of cutter wheel 10 at approximately equal intervals), in addition to the cutter wheels according to this invention.

As is clear from the above described Embodiments 1 to 5, a cutter wheel 40 where the pitch of protrusions is smaller than that in the above described conventional cutter wheel 20 of a highly penetrative type (that is to say, the number of divisions in the circumference is increased) is used for scribing, and thereby, the strength of the surface edge of glass substrates which are broken along the formed scribe lines can be increased, and excellent scribe lines can be formed even in thin substrates.

In addition, the scribing pressure region where subsequent breaking can be achieved and excellent scribe lines can be formed is large, and therefore, it becomes difficult for the scribe lines to be affected by the wear at the end of the blade or the difference in the locations where scribe lines are formed on the glass substrate, and thus, it becomes possible to form scribe lines which are stable for a long period of time.

Conventional cutter wheel 20 of a highly penetrative type and cutter wheel 40 of the present invention can be selected for use, so that excellent scribe lines can be formed on substrates which are objects for scribing of a wide range of thicknesses; from thin to thick.

Here, those skilled in the art will easily understand that the strength at the surface edges of glass substrates after being broken and separated along the formed scribe lines can be increased by reducing the pitch of protrusions and the height of protrusions.

In addition, excellent scribe lines can also be formed in a substrate having a thickness of no greater than 0.4 mm by adjusting the height and the pitch of the protrusions of cutter wheel 40, and unnecessary cracking and expansion thereof can be prevented after breaking the substrate.

Furthermore, in the case where scribe lines are formed in a glass substrate using cutter wheel 40 of the present invention, the strength against bending and the strength at the surface edges of the glass substrates which are finally gained by subsequently breaking and separating the glass substrate can be increased.

Furthermore, in the case where scribe lines are formed in a glass substrate using cutter wheel 40 of the present invention, a wide and relatively low scribing pressure region where subsequent breaking can be achieved can be gained for bonded glass substrates made of different materials and having different thicknesses.

Here, though in the above described embodiments, cutter wheel 40 is illustrated as one where protrusions are uniformly formed around the entire circumference of the wheel, the invention is not limited to this, and cutter wheels of the present invention include those where protrusions are formed only partially around the circumference of the wheel, as well as those where protrusions are unevenly formed around the entire circumference of the wheel.

### Industrial Applicability

A cutter wheel of this invention and a method for scribing a brittle material substrate using the same can prevent intersection skipping and stably form a scribe line with high precision, even in the case where the thickness of the brittle material substrate is small, and therefore, can be used for scribing a brittle material substrate, such as glass.

In particular, according to this invention, a method for scribing a brittle material substrate of which the thickness is in a range from 0.4 mm to 0.7 mm where the brittle material substrate is scribed with the blade edge of a cutter wheel to which a load of 0.03 MPa to 0.19 MPa is applied is effective.

This invention is particularly effective for glass substrates which are made of non-alkaline glass or synthetic quartz glass, and a variety of brittle material substrates for a variety of flat display panels, of which typical examples are TFT liquid crystal panels, TN liquid crystal panels and STN liquid crystal panels, can be cited as applications.

This application is a divisional application of European patent application no. 05709574.7 (the "parent application"), also published under no. EP 1 712 339. The following items corresponding to the originally filed claims of the parent application form part of the content of this description as filed.

### Items

[1] A cutter wheel for scribing a brittle material substrate, where a ridge line in V shape is formed as a blade edge along the circumference of a wheel in a disc form and a number of protrusions are formed along said ridge line at approximately equal intervals, characterized in that the outer diameter of the wheel is 1.0 mm to 2.5 mm, that said protrusions are formed around the entirety of said ridge line with a pitch of 8 µm to 35 µm, that the height of said protrusions 0.5 µm to 6.0 µm, and that the angle of the blade edge is 85 ° to 140 °.
[2] The cutter wheel according to item 1, formed of a material of sintered diamond or cemented carbide.
[3] A method for scribing a brittle material substrate, where a cutter wheel of which the ridge line is formed in a V shape as a blade edge along the circumference of a wheel in a disc form and has a number of protrusions formed along said ridge line at approximately equal intervals is pressed against and rolled on a brittle material substrate, and thereby, a scribe line is formed on the surface of the brittle material substrate, characterized in that
   a cutter wheel where the outer diameter of the wheel is 1.0 mm to 2.5 mm, that said protrusions are formed around the entirety of said ridge line with a pitch of 8 µm to 35 µm, that the height of said protrusions 0.5 µm to 6.0 µm, and that the angle of the blade edge is 85 ° to 140 ° is used to scribe a brittle material substrate.
[4] A method for breaking a brittle material substrate, characterized in that a scribe line is formed on a brittle material substrate using the cutter wheel according to item 1, and that subsequently, a load is applied along the formed scribe line so that the brittle material substrate is broken.
[5] A method for manufacturing a cutter wheel for scribing a brittle material substrate, having the steps of forming a blade edge on a wheel in a disc form by roughly grinding the blade edge at at least one blade edge angle θ1 and then forming the edge side of said blade by finely grinding the blade edge at a blade edge angle θ2 which is different from blade edge angle θ1.
[6] A cutter wheel manufactured in accordance with the method for manufacturing a cutter wheel according to item 5 where a brittle material substrate is scribed.

## Claims

1. A method for manufacturing a cutter wheel for scribing a brittle material substrate, having the steps of forming a blade edge on a wheel in a disc form by roughly grinding the blade edge at at least one blade edge angle θ1 and then forming the edge side of said blade by finely grinding the blade edge at a blade edge angle θ2 which is different from blade edge angle θ1.

2. A cutter wheel manufactured in accordance with the method for manufacturing a cutter wheel according to claim 1 where a brittle material substrate is scribed.
